# EUROPEAN PATENT SPECIFICATION

(11) **EP 1 675 477 B1**
(45) Date of publication and mention of the grant of the patent: **08.09.2010**
(21) Application number: 04765938.8
(22) Date of filing: 08.10.2004
(51) Int. Cl.: A23L 1/24, A23D 7/01, A23D 7/02, A23D 7/015

(54) **REDUCED OIL EMULSION WITH VISCOSITY-BUILDING EMULSIFIER**
EMULSION MIT REDUZIERTEM ÖLGEHALT, DIE EINEN VISKOSITÄTSSTEIGERNDEN EMULGATOR ENTHÄLT
EMULSION A TENEUR EN HUILE REDUITE COMPRENANT UN EMULSIFIANT D'AUGMENTATION DE VISCOSITE

(30) Priority: 24.10.2003 US 693475; 17.08.2004 EP 04077322
(43) Date of publication of application: 05.07.2006
(73) Proprietor: Unilever N.V., 3013 AL Rotterdam (NL); Unilever PLC, London EC4Y 0DY (GB)
(72) Inventor: AQUINO, Leonardo Jose Sanchez, Englewood Cliffs, New Jersey 07632 (US); BEN-SMAIL, Khaldoun Ismail, 3133 AT Vlaardingen (NL); MELNIKOV, Sergey Michailovich, 3133 AT Vlaardingen (NL); BIALEK, Jadwiga, M. Unilever R&D Vlaardingen, 3133 AT Vlaardingen (NL)
(74) Representative: Rosen Jacobson, Frans Lucas M.
(86) International application number: PCT/EP2004/011422
(87) International publication number: WO 2005/039317

(56) References cited:
- EP-A- 0 477 827
- EP-A- 0 757 895
- WO-A-03/053149
- US-A- 5 011 701
- US-A- 5 690 981

## Description

### FIELD OF THE INVENTION

The present invention is directed to an edible emulsion comprising fibers. More particularly, the invention is directed to a reduced oil emulsion composition comprising insoluble fiber, thickener and a viscosity-building emulsifier. When, for example, the emulsion of this invention is employed to make a reduced oil salad dressing, the resulting reduced oil composition unexpectedly has the taste, viscosity, mouthfeel and appearance of full oil salad dressing. Moreover, the edible emulsion comprising insoluble fiber, thickener and viscosity-building emulsifier of this invention may, in addition to salad dressing, be used as a base for other dressings, soups, sauces, dips, spreads, fillings, drinks or the like, and for both hot, cold and frozen applications.

### BACKGROUND OF THE INVENTION

Edible emulsions are used as a base for many types of food products. Mayonnaise compositions, for example, comprise edible oil-in-water emulsions that typically have between 80 to 85% by weight oil, and egg yolk, salt, vinegar and water. Mayonnaise compositions are enjoyed by many consumers, and particularly, on sandwiches, in dips, with fish and other food applications.

The oil present in the edible emulsions used in such food products is generally present as droplets dispersed in the water phase. In addition to droplet size and the amount of droplets dispersed, the close packing of the oil droplets results in the characteristic rheological behavior of the emulsions used to make the desired food product (e.g., mayonnaise).

Notwithstanding the fact that many consumers enjoy the taste of full fat products, there is an increasing demand for food products prepared from edible emulsions that have less fat and calories than conventional full fat food products.

It is known that attempts have been made to formulate reduced fat and calorie food products, like mayonnaise compositions, but the resulting food products typically do not have the texture and sensorial properties associated with full fat containing products. The inferior texture is invariably related to the reduced levels of oil in the edible emulsions, resulting in food products that lack the sensorial properties of full fat products since reduced fat and calorie products have high levels (i.e., over 3.8% by weight) thickeners like starch and gum in lieu of oil. The replacement of oil with high levels of starch and gum is effective for minimizing calories in food products, but unfortunately causes the food product to be tacky (difficult to dissipate) within the mouth and very dull and opaque looking.

This invention, therefore, is directed to a reduced oil edible emulsion comprising insoluble fiber, thickener and a viscosity-building emulsifier whereby the viscosity building emulsifier is part of a dairy base. The edible emulsion of this invention can be used as a base to make a variety of food products, and unexpectedly, results in a food product that has the characteristics of a full fat product when less than the conventional amount of oil is employed. Furthermore, the food products made with the edible emulsion comprising insoluble fiber, thickener and viscosity-building emulsifier of this invention have, in addition to excellent texture and sensorial properties, the added health benefits associated with food products containing fiber. Such food products also have the benefit of being substantially free of carbohydrates; therefore, very desirable to high protein/low carbohydrate dieters.

### ADDITIONAL REFERENCES

Efforts have been made for preparing edible emulsions. In U.S. Patent Application No. 2002/0197382 A1, edible oil-in-water emulsions having a reduced content of oil are described.

Other efforts have been made for preparing edible emulsions. In U.S. Patent No. 6,039,998, freezable and low calorie spoonable dressings with fatty acid esterified propoxylated glycerin compositions are described.

Still other efforts have been made for preparing emulsions. In U.S. Patent No. 5,690,981, low calorie foodstuffs are described.

US-A-5,011,701 discloses edible emulsified food products comprising oil, water, emulsifier, buttermilk, thickener and insoluble fibers. EP-A-0,477,827 discloses a mayonnaise comprising oil, water, whey protein, insoluble fibers and starch thickener. WO-A-03/053149 discloses compositions suitable for producing edible emulsions (dressings) which comprise oil, water, dairy bases such as milk protein or buttermilk, emulsifiers, thickeners and insoluble fruit fiber.

EP-A-757,895 discloses a no or low fat salad composition including a continuous aqueous phase containing a semi-gelled pourable system comprising an amidated galacturonic acid methyl ester with a degree of esterification below 55% to replace part or all of the fat.

None of the additional information above describes an edible emulsion having reduced oil content, insoluble fiber, thickener and viscosity-building emulsifier whereby the edible emulsion can be used to make a food product with characteristics, including visual characteristics, that are similar to those of food products comprising edible emulsions containing conventional amounts of oil.

### SUMMARY OF THE INVENTION

In a first aspect, the present invention is directed to an edible emulsion as specified in claim 1 and comprising:
a) oil;
b) water;
c) a viscosity-building emulsifier that at 2.0% by weight is partially or completely not soluble in acidified deionized water having a pH of ≤ 5.5, or a viscosity-building emulsifier that is at least about 50.0% by weight protein, or both;
d) insoluble fruit fiber; and
e) thickener,
wherein the edible emulsion is smooth and at least one of the viscosity-building emulsifies is added as part of a dairy base. Said edible emulsion is suitable to use as a base for a food product (X) that has substantially the same taste, viscosity and appearance of a food product (X*) having a standard oil content, where X and X* are identical food products and X has at least about 10.0% (preferably, from about 15 to about 35.0%) by weight less oil than X*.

In a second aspect, the present invention is directed to a method for making an edible emulsion of the first aspect of this invention, as specified in claim 10.

In a third aspect, the present invention is directed to a food product comprising an edible emulsion of the first aspect of this invention, as specified in claim 13.

Oil, as used herein, means triglycerides, and especially, those that are liquids at room temperature. Water, as used herein, means pure water or a solution thereof. Insoluble fiber means fiber suitable for human consumption and not water soluble whereby when the same is supplied as an additive composition, the additive composition is not more than 50% by weight soluble fiber, based on total weight of soluble and insoluble fiber in the additive composition. Edible emulsion with conventional amounts of oil means an emulsion, not in final food product form, suitable for a real mayonnaise base and comprising about 80.0 - 85.0% by weight oil, based on total weight of the edible emulsion. Texture and sensorial properties associated with full fat products means that food products made with the edible emulsions of the present invention unexpectedly have the taste, viscosity, mouthfeel and appearance consistent with full fat products wherein mouthfeel consistent with full fat products means not sticky or tacky as is the case with food products having high levels of starch and gum, such that the same breakdown and dissipate in the mouth in a time and manner similar to that of full fat products. Appearance consistent with full fat products means not opaque and unattractive, but oily-looking

Coarse, as used herein means the insoluble fibers are detectable in the emulsion thereby producing discernible grainy or particle comprising characteristics when in the mouth. Smooth, as used herein, means no discernible grainy or particle comprising characteristics when in the mouth. Partially soluble means not 100.0% dissolved. Viscosity-building means able to increase viscosity by a factor of at least 10.0% in a product when compared to other emulsifiers used in the same product and at the same weight percent. Reduced oil food product, as used herein, means a food product with insoluble fibers and less oil than a food product having the standard oil content (ie., the amount of oil known to be used in a particular food product in the absence of insoluble fibers). Food product, as used herein, means a product ready for consumption and comprising the edible emulsion of this invention. Identical food products mean food product (X) and food product (X*) are food products of the same category, for example, (X) and (X*) may both be mayonnaise compositions or dips. Substantially free of carbohydrates means 3.8% by weight or less, and preferably, between about 2.0 and about 3.5% by weight starch, based on total weight of the food product.

### DETAILED DESCRIPTION OF THE PREFERRED EMBODIMENTS

The only limitation with respect to the type of oil used to make the edible emulsion of this invention is that the oil is suitable for human consumption. Illustrative examples of the types of oil which may be used in this invention include, without limitation, those which are liquid at ambient temperature like avocado, mustard, coconut, cottonseed, fish, flaxseed, grape, olive, palm, peanut, rapeseed, safflower, sesame, soybean, sunflower, mixtures thereof and the like.

Other types of oils which may be used in this invention are solid at ambient temperature. Illustrative examples of the oils which are solid at room temperature and suitable for use in this invention include, without limitation, butter fat, chocolate fat, chicken fat, coconut oil, hydrogenated palm kernel oil, mixtures thereof and the like.

In a preferred embodiment, the oil used in this invention is a liquid at ambient temperature. In a most preferred embodiment, the oil used in this invention is soybean, sunflower or rapeseed oil or a mixture thereof.

The amount of oil used in the edible emulsion of this invention is typically more than about 7.5 weight percent and less than about 85.0 weight percent, based on total weight of the edible emulsion. Preferably, the amount of oil employed in the edible emulsion is from about 15.0% to about 80.0%, and most preferably, from about 20.0 to about 60.0% by weight, based on total weight of the edible emulsion and including all ranges subsumed therein.

The water used in this invention can be pure water, tap water, bottled water, deionized water, spring water, or a mixture thereof. Thus, the water used in this invention may be an aqueous solution comprising salts or minerals or both. Typically, water makes up the balance of the edible emulsion and the food product made with the same.

The dairy base suitable for use in this invention can be skim, part skim or full fat dairy base. Typical non-limiting examples of the types of dairy base suitable for use in this invention include yoghurt, crème fraiche, sour cream, cream, mixtures thereof and the like. When used the final food product will preferably comprise from about 5.0% to about 75.0% by weight dairy base, more preferably from about 8% to about 60% by weight dairy base.

Regarding the insoluble fibers used in this invention, such fibers are found in fruits, both citrus and non-citrus. Preferred insoluble fibers suitable for use in this invention can be recovered from tomatoes, peaches, pears, apples, plums, lemons, limes, oranges, grapefruits or mixtures thereof. The edible emulsion of this invention comprises from about 0.1 to about 1.0%, and preferably, from about 0.1 to about 0.75%, and most preferably, from about 0.15 to about 0.50% by weight insoluble fibers, based on total weight of the edible emulsion, and including all ranges subsumed therein. Such insoluble fibers are commercially available from suppliers like J. Rettenmaier and Sohne GMBH under the Vitacel name and Herbstreith & Fox under the Herbacel name. Preferably in the finished food products, these insoluble fibers typically have lengths from about 25 to about 400 microns, and preferably, from about 50 to 185 microns, and most preferably, from about 100 to about 165 microns, including all ranges subsumed therein. The widths of such fibers are typically between about 3.0 to about 20.0 microns, and preferably, from about 5.0 to about 10.0 microns.

The emulsifier used in this invention is typically a mixture of emulsifiers. The first emulsifier selected usually has an HLB of greater than about 8.0, and preferably, greater than about 11.0, and most preferably, from about 12.0 to about 18.0, including all ranges subsumed therein. Illustrative examples of such an emulsifier suitable for use in the emulsifier mixture employed in this invention include, without limitation, PEG 20 tristearate, PEG 20 , trioleate, PEG 20 monostearate, PEG 20 monooleate, PEG 20 monopalmitate and PEG 20 monolaurate sorbitan, derivatives thereof, mixtures thereof and the like, also made available by ICI Surfactants under the names Tween or Span. The preferred emulsifier employable in this invention is, however, a protein, like fruit, vegetable (e.g., pea protein), milk (e.g., whey) or soy protein, or mixtures thereof. Another preferred protein suitable for use in this invention is phospholipoprotein (e.g., phospholipoprotein present in egg yolk, whole egg or enzyme modified egg), and especially, egg yolk derived phospholipoprotein modified with phospholipase A as disclosed in U.S. Patent No. 5,028,447.

The viscosity-building emulsifier that at 2.0% by weight is partially or completely not soluble in acidified deionized water having a pH of ≤5.5 and the emulsifier that is at least about 50.0% by weight protein (preferably at least about 70.0% by weight protein) are both suitable for human consumption and desired in order to enhance not only the rheological characteristics of the edible emulsion of the present invention but also the appearance of the same.

Illustrative examples of the types of viscosity-building emulsifiers that are partially or completely not soluble in acidified deionized water having a pH of ≤5.5 include, without limitation, those generally classified as caseins. Preferred emulsifiers in this category include an alpha-casein, epsilon-casein, beta-casein, kappa-casein, mixtures thereof or the like. Especially preferred viscosity building emulsifiers suitable for use in this invention are casein salts like potassium caseinate, sodium caseinate, ammonium caseinate, mixtures thereof or the like.

The viscosity building emulsifiers that are at least about 50.0% (and preferably at least about 70.0%) by weight protein and suitable for use in this invention include lactalbumin, lactoglobulins, lactferrin, mixtures thereof or the like. Especially preferred viscosity-building emulsifiers in this class include protein comprising material that is not denatured and suitable to adsorb to oil droplet interfaces within the edible emulsion. Such a viscosity-building emulsifier can be, for example, be animal or plant derived and often becomes partially or completely not soluble in aqueous solutions having a pH below about 2.0. In an especially preferred embodiment, a solution of protein aggregates, like whey protein aggregates, made by first heating a native whey emulsifier to above 70°C at a pH preferably above the isoelectric point (with substantially little to no salt {≤0.1} being present) may be used, where whey protein sold under the Bipro name is the often preferred soluble aggregate precursor.

The total amount of emulsifier employed in the edible emulsion of this invention is typically from about 0.5 to about 12.0%, and preferably, from about 0.5% to about 8.0%, and most preferably, from about 1.5 to about 6.5% by weight emulsifier, based on total weight of the edible emulsion and including all ranges subsumed therein. However, the edible emulsion typically comprises from about 0.1 to about 4.0, and preferably, from about 0.125 to about 3.0, and most preferably, from about 0.15 to about 1.75% by weight viscosity-building emulsifier, based on total weight of the edible emulsion and including all ranges subsumed therein, with the proviso that the amount of chemical emulsifier employed does not exceed the amount of viscosity-building emulsifier.

When making the edible emulsion comprising insoluble fibers of the present invention, emulsifier is typically added to the water, or oil or both water and oil. Likewise, the insoluble fibers may also be added to the water or oil, or both water and oil, either before, during or after the addition of the emulsifier. In a preferred embodiment, the insoluble fibers are added before emulsion formation is completed. The resulting water and oil phases can be mixed in a conventional mixer (e.g., under moderate sheer) to produce an edible coarse emulsion suitable for use as a base for food products. Such a coarse emulsion comprises oil droplets wherein at least about 75%, and preferably, at least about 85.0%, and most preferably, at least about 95.0% of all of the oil droplets present in the coarse emulsion have a diameter that is greater than about 2.5 µm, and preferably, greater than about 5.0 µm, and most preferably, between about 10.0 to about 200.0 µm.

As the edible emulsion of the invention is a smooth emulsion, the coarse edible emulsion is homogenized in, for example, a high pressure homogenizer. The homogenization step is typically carried out under pressures from about 35.0 to about 650.0 bar, and preferably, from about 40.0 to about 600.0 bar, and more preferably from about 45.0 to about 550.0 bar and most preferably, from about 150 to 400 bar, including all ranges subsumed therein. Preferably, the homogenization is carried out in two or more separate homogenization steps. Typically, such a homogenization step is carried out at a temperature from about 15°C to about 70°C (preferably about ambient temperature) and for enough time to produce oil droplets (in the edible emulsion) whereby at least about 95.0% by weight of all oil droplets present within the edible emulsion have a diameter which is less than 5.0 µm.

In some cases it may be preferred to add a step of pasteurizing the edible emulsion after the homogenization. When optional additives like spices and seasonings are added this may be done before the pasteurization.

The preferred thickeners suitable for use in this invention include conventional food grade starches, pectin and gums, and preferably, a mixture of the same. The starches are typically added to water to make a paste comprising about 1.0 to about 15.0% by weight starch, based on total weight of starch and water, including all ranges subsumed therein. At least about 50.0%, and preferably, about 100.0% of the paste is added and mixed in to the edible emulsion after the edible emulsion is has been homogenized. The gum is typically added anytime before or after the emulsion is made and thoroughly mixed within the same.

The Food grade starches that may be used in this invention include modified, non-modified, instant or cook-up starches as well as mixtures of the same. Such starches (e.g., com, waxy maize, potato, rice, tapioca, wheat or mixtures thereof) are known thickening agents and often made commercially available from suppliers like National Starch and Chemical Company, Com Products International and E.W. Staley Manufacturing Company. Cook-up starches are the generally preferred starches used in the edible emulsion of the present invention, with Snowflake cook-up starch from Com Products International being especially preferred. The amount of starch used in the food products made with the edible emulsion of the present invention is uncharacteristically low and usually from about 0.5 to about 3.5, and preferably, from about 1.0 to about 3.5, and most preferably, from about 2.5 to about 3.5% by weight starch, based on total weight of the food product, including all ranges subsumed therein.

Illustrative examples of the preferred gums suitable for use in this invention include cellulose, locust bean, xanthan, carrageenan, guar gum, mixtures thereof and the like. Such gums typically make up from about 0.1 to about 0.3% by weight of the total weight of the food product comprising-the edible emulsion, including all ranges subsumed therein.

It should be noted that the edible emulsion comprising insoluble fibers disclosed herein preferably has an oil-in-water phase. Thus, it is within the scope of this invention for the edible emulsion comprising insoluble fibers to be a single phase emulsion or a multiple phase emulsion, like a water-in-oil-in-water emulsion.

It is particularly noted herein that if heat treatment, like pasteurization, is not desired, the edible emulsion described herein may be acidified in order to inhibit microbiological growth. When acidified and a viscosity-building emulsifier that at 2.0% by weight is partially or completely not soluble in acidified deionized water having a pH of ≤5.5 is employed, the food product typically has enough acidulant added so that the pH of the same is from about 2.75 to about 5.5, and preferably, from about 2.85 to about 5.50, and most preferably, from about 3.00 to about 4.00, including all ranges subsumed therein. In a preferred embodiment, at least about 50.0% by weight of the acid employed is added after homogenization and in a most preferred embodiment, about 100% of the acid employed is added after homogenization when the viscosity building emulsifier is one that at 2.0% by weight is partially or completely not soluble in acidified deionized water having a pH of ≤ about 5.5.

There is no limitation with respect to the type of acidulant employed in this invention other than that the acidulant is one which may be used in formulations suitable for human consumption. Illustrative examples of the types of acidulants which may be used in this invention include, without limitation, acetic acid, citric acid, hydrochloric acid, lactic acid, malic acid, phosphoric acid, glucono-delta-lactone, mixtures thereof and the like. In a preferred embodiment, the acidulant employed in this invention is a mixture of hydrochloric or phosphoric acid, and lactic acid, with lactic acid making up no more than about 40.0% by weight of the total weight of the acidulant mixture. It is noted that acidulant may be added before or after the edible emulsion with insoluble fiber is made. In an especially preferred embodiment, however, acidulant is added after the emulsion is made.

It is noted that in lieu of oil or in combination with oil, conventional fat substitutes may be used. Preferred fat substitutes employable in this invention include fatty acid-esterified alkoxylated glycerin compositions as well as sucrose fatty acid esters. The former and latter are described in U.S. Patent Nos. 5,516,544 and 6,447,824, respectively. When employed, such conventional fat substitutes preferably make up at least about 30.0%, and most preferably, at least about 75.0% of the total weight of the oil in the emulsion.

The edible emulsions of this invention may be combined with optional additives to make a food product ready for consumption. Preferred optional additives which may be employed in the food products made with edible emulsion of the present invention include mustard flour, chocolate, nut paste, salt (and other spices and seasonings), vitamins, artificial flavors and colors (e.g., beta carotene) fruit puree, preservatives, antioxidants, chelators, meat like ham and bacon bits or particulates, buffering agents, vegetable bits or particulates, fruit bits or particulates, cheese, mixtures thereof and the like. Such optional additives, when used, collectively, do not make up more than about 40.0% by weight of the total weight of the food product.

When preparing the food product ready for consumption, the optional additives may be added to water and/or oil before the edible emulsion comprising insoluble fiber is made, but preferably the optional additives are mixed in after the emulsion is made (especially when the optional additives are large, like fruit or bacon bits). In a preferred embodiment, the resulting food product made with the edible emulsion comprising insoluble fiber of the present invention comprises less than about 75.0%, and preferably, less than about 55.0%, and most preferably, from about 6.0 to about 35.0% by weight oil, based on total weight of the food product and including all ranges subsumed therein.

The preferred preservatives suitable for use in this invention include sodium benzoate, potassium benzoate, potassium sorbate, sorbic acid, benzoic acid, mixtures thereof and the like. Anti-oxidants suitable for use in this invention include a tocopherol, ascorbic acid, ascorbyl palmitate, tertiary-butyl hydroquinone, mixtures thereof and the like. Chelators suitable for use in this invention include EDTA and its salts, citric acid, sodium tripolyphosphate, sodium carbonate, potassium carbonate, mixtures thereof and the like.

The fruit and vegetable bits that may be used in food products comprising the edible emulsion of this invention are typically small enough to fit through the orifice present in a conventional squeeze bottle. The vegetable bits often include peppers, carrots, cabbage, onion, broccoli, mixtures thereof and the like. The fruit bits often include pears, apples, grapes, tomatoes, mixtures thereof and the like.

The cheese suitable for use in this invention can be skim, part skim or full fat cheese. Typical non-limiting examples of the types of cheese (including processed cheese) suitable for use in this invention include gouda, edam, leyden, cheddar, goat, chesire, stilton, mozzarella, cream cheese, brie, feta, tilsit, mixtures thereof and the like. When cheese is employed to make the food product, it is preferred that the same be melted prior to being added to the edible emulsion or any of its precursor phases. Often, the final food product will comprise from about 10.0% to about 35.0% by weight cheese.

Still other additives which may be optionally added to the food products of this invention include protein sources and sweeteners. The former include caseinate and skimmed milk powder and the latter include syrups, sucrose, glucose, saccharin, aspartame, dextrose, lactose, levelose, maltose, fructose, mixtures thereof and the like.

The viscosity of the food products made with the edible emulsion comprising insoluble fiber as disclosed herein is typically greater than about 3,000 and less than about 150,000 centipoise. When a sauce or pourable dressing is, for example, the desired food product, the viscosity of the food product is preferably from about 4,000 to about 10,000 centipoise, and most preferably, from about 4,350 to about 6,000 centipoise.

When a food product is desired with a relavitely thin consistency, the viscosity of the food product is preferably from about 500 to about 10,000 centipoise, more preferably 1,000 to about 3,000 centipoise.

When the desired food product is, for example, a filling, dip or spoonable dressing, the viscosity of the food product is preferably from about 12,000 to about 120,000 centipoise, and most preferably, from about 16,000 to about 80,000 centipoise, whereby the viscosity of the food product is measured on a Haake Rheometer (Rotovisco RV20) at room temperature using a set of concentric cylinders (or bob-in-cup) with a 1 mm gap, the bob having a diameter of 1.0 cm and length of 1.0 cm. The inner cylinder or bob starts rotating from 0 shear and ramps up to a shear rate of 134 sec⁻¹ in 542 sec. By way of comparison, the viscosity values refer to the shear rate of 10 sec⁻¹.

The packaging for the food products comprising the edible emulsion of this invention is often a glass jar, food grade sachet or squeezable plastic bottle. Sachets are preferred for food service applications, and a plastic bottle is preferred for domestic use.

The examples which follow are provided to facilitate an understanding of the present invention. The examples are not intended to limit the scope of the claims.

### Example 1

A ready-to-use salad dressing having the edible emulsion comprising sour crème and fiber of this invention were made with the following ingredients:

| Ingredient | Percent by Weight*** |
|---|---|
| Sour crème | 25 - 45 |
| Pectin | 0.6 - 1.5 |
| Sunflower oil | 15 - 23 |
| Herbacel Citrus Fiber* | 0.1 - 0.5 |
| Dried egg yolk | 0.5 - 1 |
| Vinegar 12° | 2.0 - 3.5 |
| Seasoning | 0.1 - 7 |
| Water | 25 - 45 |

| | |
|---|---|
| The ingredients except the seasoning were mixed and then homogenized in a two step homogenizer ((High Pressuer Valve Homogenizer (Bran Luebbe SHL 05). Seasoning (spices) was added and the resultant mixture was pasteurized between 88 and 90°C for 2 min. The viscosity of the salad dressing was about 1300 - 1800 centipoise. *Made commercially available by Herbstreith & Fox | |

## Claims

1. An edible emulsion comprising:
a) oil;
b) water,
c) a viscosity-building emulsifier that at 2.0% by weight is partially or completely not soluble in acidified deionized water having a pH of ≤5.5 or a viscosity-building emulsifier that is at least about 50.0% by weight protein, or both
d) from about 0.1 to about 1.0% by weight of the insoluble fruit fibers; and
e) thickener
wherein the edible emulsion is smooth and at least one of the viscosity-building emulsifiers is added as part of a dairy base and wherein at least about 95.0% by weight of all oil droplets present are less than 5.0 µm.

2. The edible emulsion according to claim 1 whereby the dairy base is selected from the group consisting of yoghurt, creme fraiche, sour cream, cream, mixtures thereof.

3. The edible emulsion according to any one of the preceding claims wherein the edible emulsion comprises from about 7.5 to about 85.0% by weight oil.

4. The edible emulsion according to any one of the preceding claims wherein the insoluble fruit fibers are recovered from tomatoes, peaches, pears, apples, plums, lemons, limes, oranges, grapefruits or mixtures thereof.

5. The edible emulsion according to any one of the preceding claims wherein the insoluble fruit fibers comprise citrus fruit fibers.

6. The edible emulsion according to any one of the preceding claims wherein the edible emulsion comprises from about 0.5 to about 12.0% by weight emulsifier.

7. The edible emulsion according to claim 7 wherein the emulsifier is a mixture of emulsifiers comprising from about 0.1 to about 2.5% by weight viscosity-building emulsifier.

8. The edible emulsion according to claim 8 wherein at least one emulsifier in the mixture of emulsifiers has an HLB of greater than about 8.0.

9. The edible emulsion according to claim 1 wherein the thickener is a food grade starch, pectin, gum or mixture thereof.

10. A method for making an edible emulsion according to any one of the preceding claims comprising the steps:
a) mixing, in no particular order, oil, water, insoluble fruit fiber, thickener and emulsifier to make a coarse emulsion; and
b) recovering the coarse emulsion
wherein the coarse emulsion is homogenized in a homogenizer to produce a smooth emulsion.

11. The method for making an edible emulsion according to claim 10 wherein
the homogenizer is pressurized from about 35.0 to about 650.0 bar and at a temperature from about 15°C to about 70°C.

12. The method for making an edible emulsion according to claim 11whereby the homogenization is carried out in two or more separate homogenization steps.

13. A food product comprising an edible emulsion according to any one of claims 1-9 wherein the food product is a dressing, soup, sauce, dip, spread, filling or drink.

14. The food product according to claim 13 wherein the food product has a viscosity greater than about 500 centipoise and less than about 10,000 centipoise.

15. The food product according to claim 14 wherein the food product comprises about 0.5 to about 3.5 % by weight starch.

## Patentansprüche

1. Essbare Emulsion, umfassend:
a) Öl;
b) Wasser;
c) einen die Viskosität erhöhenden Emulgator, der bei 2,0 Gewichts-% in azidifiziertem entionisiertem Wasser, das einen pH von ≤ 5,5 hat, teilweise oder vollständig unlöslich ist, oder einen die Viskosität erhöhenden Emulgator, der wenigstens etwa 50,0 Gewichts-% Protein ist, oder beide,
d) etwa 0,1 bis etwa 1,0 Gewichts-% der unlöslichen Fruchtfasern und
e) Verdickungsmittel
wobei die essbare Emulsion glatt ist und wenigstens einer der die Viskosität erhöhenden Emulgatoren als Teil einer Milchproduktgrundlage zugesetzt ist und
wobei wenigstens etwa 95,0 Gewichts-% aller vorliegenden Öltröpfchen kleiner als 5,0 µm sind.

2. Essbare Emulsion nach Anspruch 1, wobei die Milchproduktgrundlage ausgewählt ist aus der Gruppe, bestehend aus Jogurt, Creme fraiche, Sauerrahm, Sahne, Gemischen davon.

3. Essbare Emulsion nach einem der vorangehenden Ansprüche, wobei die essbare Emulsion etwa 7,5 bis etwa 85,0 Gewichts-% Öl umfasst.

4. Essbare Emulsion nach einem der vorangehenden Ansprüche, wobei die unlöslichen Fruchtfasern aus Tomaten, Pfirsichen, Birnen, Äpfeln, Pflaumen, Zitronen, Limetten, Orangen, Grapefruits oder Gemischen davon gewonnen werden.

5. Essbare Emulsion nach einem der vorangehenden Ansprüche, wobei die unlöslichen Fruchtfasern Zitrusfruchtfasern umfassen.

6. Essbare Emulsion nach einem der vorangehenden Ansprüche, wobei die Emulsion etwa 0,5 bis etwa 12,0 Gewichts-% Emulgator umfasst.

7. Essbare Emulsion nach Anspruch 7, wobei der Emulgator ein Gemisch von Emulgatoren ist, das etwa 0,1 bis etwa 2,5 Gewichts-% Viskosität erhöhenden Emulgator umfasst.

8. Essbare Emulsion nach Anspruch 8, wobei wenigstens ein Emulgator in dem Gemisch von Emulgatoren einen HLB-Wert von größer als etwa 8,0 hat.

9. Essbare Emulsion nach Anspruch 1, wobei das Verdickungsmittel eine Stärke, ein Pektin, ein Gummi oder ein Gemisch davon, jeweils mit Lebensmittelqualität, ist.

10. Verfahren zur Herstellung einer essbaren Emulsion nach einem der vorangehenden Ansprüche, umfassend die Schritte:
a) Vermischen, in keiner bestimmten Reihenfolge, von Öl, Wasser, unlöslicher Fruchtfaser, Verdickungsmittel und Emulgator, um eine grobe Emulsion herzustellen, und
b) Gewinnen der groben Emulsion,
wobei die grobe Emulsion in einem Homogenisator homogenisiert wird, um eine glatte Emulsion herzustellen.

11. Verfahren zur Herstellung einer essbaren Emulsion nach Anspruch 10, wobei der Homogenisator unter einem Druck von etwa 35,0 bis etwa 650,0 bar und bei einer Temperatur von etwa 15 °C bis etwa 70 °C gehalten wird.

12. Verfahren zur Herstellung einer essbaren Emulsion nach Anspruch 11, wobei die Homogenisierung in zwei oder mehr getrennten Homogenisierungsschritten durchgeführt wird.

13. Nahrungsmittelprodukt, umfassend eine essbare Emulsion nach einem der Ansprüche 1 bis 9, wobei das Nahrungsmittelprodukt ein Dressing, eine Suppe, eine Soße, ein Dip, ein Aufstrich, eine füllung oder ein Getränk ist.

14. Nahrungsmittelprodukt nach Anspruch 13, wobei das Nahrungsmittelprodukt eine Viskosität von größer als etwa 500 Centipoise und kleiner als etwa 10 000 Centipoise hat.

15. Nahrungsmittelprodukt nach Anspruch 14, wobei das Nahrungsmittelprodukt etwa 0,5 bis etwa 3,5 Gewichts-% Stärke umfasst.

## Revendications

1. Émulsion comestible, comprenant :
a) de l'huile ;
b) de l'eau ;
c) un émulsifiant d'augmentation de viscosité qui à 2,0 % en poids, est partiellement ou complètement non soluble dans de l'eau désionisée acidifiée ayant un pH ≤ 5,5 ou un émulsifiant d'augmentation de viscosité qui est au moins d'environ 50,0 % en poids de protéine ou les deux,
d) d'environ 0,1 à environ 1,0 % en poids de fibres de fruit insolubles ; et
e) un épaississant,
l'émulsion comestible étant lisse et au moins l'un des émulsifiants d'augmentation de viscosité étant ajouté en tant que partie d'une base laitière et au moins environ 95,0 % en poids de toutes les gouttelettes d'huile présentes étant inférieures à 5,0 µm.

2. Émulsion comestible selon la revendication 1, dans laquelle la base laitière est choisie dans le groupe comprenant le yogourt, la crème fraîche, la crème aigre, la crème et leurs mélanges.

3. Émulsion comestible selon l'une quelconque des revendications précédentes, ladite émulsion comestible comprenant d'environ 7,5 à environ 85,0 % en poids d'huile.

4. Émulsion comestible selon l'une quelconque des revendications précédentes, dans laquelle les fibres de fruit insolubles sont issues de tomates, de pêches, de poires, de pommes, de prunes, de citrons, de citrons verts, d'oranges, de pamplemousses ou de leurs mélanges.

5. Émulsion comestible selon l'une quelconque des revendications précédentes, dans laquelle les fibres de fruit insolubles comprennent des fibres d'agrumes.

6. Émulsion comestible selon l'une quelconque des revendications précédentes, ladite émulsion comestible comprenant d'environ 0,5 à environ 12,0 % en poids d'émulsifiant.

7. Émulsion comestible selon la revendication 7, l'émulsion étant un mélange d'émulsifiants comprenant d'environ 0,1 à environ 2,5 % en poids d'émulsifiant d'augmentation de la viscosité.

8. Émulsion comestible selon la revendication 8, dans laquelle au moins un émulsifiant dans le mélange d'émulsifiants a une valeur HLB supérieure à environ 8,0.

9. Émulsion comestible selon la revendication 1, dans laquelle l'épaississant est un amidon de qualité alimentaire, de la pectine, une gomme ou un mélange de ceux-ci.

10. Méthode de préparation d'une émulsion comestible selon l'une quelconque des revendications précédentes, comprenant les étapes consistant à:
a) mélanger, dans un ordre quelconque, l'huile, l'eau, les fibres de fruit insolubles, l'épaississant et l'émulsifiant pour produire une émulsion grossière ; et
b) récupérer l'émulsion grossière,
l'émulsion grossière étant homogénéisée dans un homogénéisateur pour produire une émulsion lisse.

11. Méthode de préparation d'une émulsion comestible selon la revendication 10, dans laquelle l'homogénéisateur est pressurisé d'environ 35,0 à environ 650,0 bars et à une température d'environ 15°C à environ 70°C.

12. Méthode de préparation d'une émulsion comestible selon la revendication 11, dans laquelle l'homogénéisation est réalisée en deux étapes d'homogénéisation séparées ou plus.

13. Produit alimentaire comprenant une émulsion comestible selon l'une quelconque des revendications 1 à 9, le produit alimentaire étant un assaisonnement, une soupe, une sauce, une sauce "dip", une pâte à étaler, une garniture ou une boisson.

14. Produit alimentaire selon la revendication 13, ledit produit alimentaire ayant une viscosité supérieure à environ 500 mPa.s et inférieure à environ 10 000 mPa.s.

15. Produit alimentaire selon la revendication 14, ledit produit alimentaire comprenant d'environ 0,5 à environ 3,5 % en poids d'amidon.
